# EUROPEAN PATENT APPLICATION

(11) **EP 4 294 116 A1**
(43) Date of publication of application: **20.12.2023**
(21) Application number: 21925203.8
(22) Date of filing: 09.02.2021
(51) Int. Cl.: H04W 84/12, H04W 28/00

(54) **COMMUNICATION METHOD AND COMMUNICATION APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: Steinbauer, Florian
(86) International application number: PCT/CN2021/076404
(87) International publication number: WO 2022/170538

(57) **Abstract**

Provided in the present disclosure are a communication method and a communication apparatus. The communication method comprises: determining a first message frame, the first message frame comprising bitmap information, the bitmap information indicating the length of a bitmap of a feedback block acknowledgement; and sending the first message frame. The technical solution provided in the embodiments of the present disclosure can increase spectrum utilisation.

## Description

### TECHNICAL FIELD

The disclosure relates to a field of communication, in particular to a multi-link communication method and a multi-link communication apparatus in wireless communication.

### BACKGROUND

The research scope of the existing Wireless Fidelity (Wi-Fi) technology includes 320MHz bandwidth transmission, and aggregation and cooperation of multiple frequency bands. Ongoing development seeks to increase the rate and throughput by at least four times relative to the current standard, and the main application scenarios are video transfer, Augmented Reality (AR), and Virtual Reality (VR).

The aggregation and cooperation of multiple frequency bands refers to communications between devices in 2.4GHz, 5GHz and 6GHz frequency bands at the same time, and a new Media Access Control (MAC) mechanism needs to be defined to manage the communications. In addition, a low latency transmission is expected to be supported in the aggregation and cooperation of multiple frequency bands.

The current aggregation and cooperation technologies of multiple frequency bands support a maximum bandwidth of 320MHz (160MHz+160MHz), and it may also support 240MHz (160MHz+80MHz) and other bandwidths.

Generally, a Block Acknowledgment (Block Ack, i.e., BA) mechanism can be used for data transmission. In the existing BA mechanism, a bitmap in a BA frame can be used to feedback reception states of data frames. However, a BA request frame does not include a length of the bitmap to be fed back, which may result in a waste of resources.

### SUMMARY

Aspects of the disclosure will at least solve the above problems and/or drawbacks. Embodiments of the disclosure provide the following technical solution.

A multi-link communication method is provided according to an example embodiment of the disclosure. The method can be performed by an originator. The method includes: determining a first message frame, in which the first message frame includes bitmap information, and the bitmap information indicates a length of a bitmap of a Block Acknowledgment (BA) fed back; and sending the first message frame.

Another multi-link communication method is provided according to an example embodiment of the disclosure. The method can be performed by a recipient. The method includes: receiving a first message frame, in which the first message frame includes bitmap information, and the bitmap information indicates a length of a bitmap of a Block Acknowledgment (BA) fed back; and performing a communication operation based on the first message frame.

A multi-link communication apparatus is provided according to an example embodiment of the disclosure. The apparatus includes: a processing module, configured to determine a first message frame, in which the first message frame includes bitmap information, and the bitmap information indicates a length of a bitmap of a Block Acknowledgment (BA) fed back; and a communicating module, configured to send the first message frame.

Another multi-link communication apparatus is provided according to an example embodiment of the disclosure. The apparatus includes: a communication module, configured to receive a first message frame, in which the first message frame includes bitmap information, and the bitmap information indicates a length of a bitmap of a Block Acknowledgment (BA) fed back; and an executing module, configured to perform a communication operation based on the first message frame.

An electronic device is provided according to an example embodiment of the disclosure. The electronic device includes: a memory, a processor, and a computer program stored on the memory and executable by the processor, in which when the computer program is executed by the processor, the above methods are performed.

A computer-readable storage medium having a computer program stored thereon is provided according to an example embodiment of the disclosure. When the computer program is executed by a processor, the above methods are performed.

The technical solution provided by the exemplary embodiments of the disclosure can improve spectrum utilization.

### BRIEF DESCRIPTION OF THE DRAWINGS

The above and additional features of embodiments of the disclosure will become more apparent by describing the example embodiments of the disclosure in detail with reference to the accompanying drawings, in which:
FIG. 1 is a schematic diagram illustrating an example of a Block Acknowledgement (BA) mechanism.
FIG. 2 is a flowchart illustrating a communication method according to an example embodiment of the disclosure.
FIG. 3 is a flowchart illustrating a communication method according to an example embodiment of the disclosure.
FIG. 4 is a block diagram illustrating a communication apparatus according to an example embodiment of the disclosure.

### DETAILED DESCRIPTION

The following description with reference to the accompanying drawings is provided to fully understand the embodiments of the disclosure defined by the appended claims and their equivalents. The embodiments of the disclosure include various specific details, which are considered to be exemplary only. In addition, descriptions of well-known techniques, functions and structures may be omitted for the sake of clarity and brevity.

The terms and words used in this disclosure are not limited to their written meanings, but are used only by the inventors to enable a clear and consistent understanding of the disclosure. Accordingly, to those skilled in the art, the description of the embodiments of the disclosure is provided for illustrative purposes only, and not for limiting purposes.

It is understandable that, unless the context clearly indicates otherwise, the singular forms "a", "one", "said" and "the" used herein may also include plural forms. It should be further understood that the term "includes" as used in this disclosure refers to the presence of the described features, integers, steps, operations, components and/or assemblies, but does not exclude the presence or addition of one or more other features, integers, steps, operations, components, assemblies and/or groups thereof.

It is understandable that while the terms "first" and "second" may be used herein to describe various elements, these elements should not be limited by these terms. These terms are used only to distinguish one element from another. Therefore, without departing from the teachings of the example embodiments, the first element discussed below may be referred to as the second element.

It is understandable that when the component is "connected" or "coupled" to another component, it may be directly connected or coupled to other components, or there may be an intermediate component. In addition, "connected" or "coupled" as used herein may include wirelessly connected or wirelessly coupled. The term "and/or" or the expression "at least one/at least one of ......" as used herein includes any and all combinations of one or more relevant listed items.

Unless otherwise defined, all terms used herein, including technical terms and scientific terms, have the same meaning as generally understood by those skilled in the art to which this disclosure belongs.

Embodiments of the disclosure will be described in detail below in combination with the accompanying drawings.

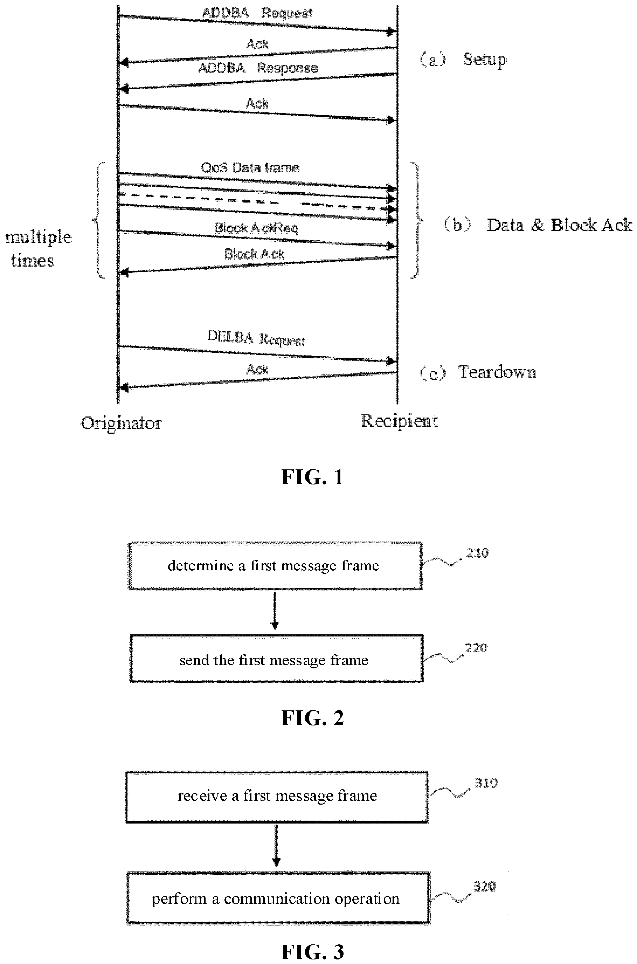

FIG. 1 is a schematic diagram illustrating an example of a Block Acknowledgement (Block Ack, BA) mechanism. As illustrated in FIG. 1, in the BA mechanism, data transmission between an originator and a recipient can be performed via 3 stages.

In a Setup stage (i.e., stage (a)), a session is initiated between the originator and the recipient by handshaking over a BA adding request (ADDBA Request) frame and a BA adding response (ADDBA Response) frame. The ADDBA Request frame and the ADDBA Response frame can each be a Management frame and can exist in a form of Action frame. Each Management frame (i.e., the ADDBA Request frame and the ADDBA Response frame) need to be acknowledged through an Acknowledgment (Ack). As illustrated in FIG. 1, the process of establishing a session includes that, the originator sends an ADDBA Request frame to the recipient, the recipient feeds back an Ack indicating that the ADDBA Request frame is received, the recipient sends an ADDBA Response frame in response to the ADDBA Request frame, and the originator feeds back an Ack indicating that the ADDBA Response frame is received.

After the session is established, in a Data & Block acknowledgement stage (i.e., stage (b)), for example, during a period of transmission opportunity (TXOP), the originator may send data frames, such as Quality of Service (QoS) data frames (i.e., the QoS Data frames in FIG. 1) consecutively, and may send a BA Request (e.g., Block Ack Req) frame after the transmission of all the data frames is completed, and the recipient feeds back a BA for the data frames.

After the BA is completed, the session can be closed. In detail, in a Teardown stage (i.e., stage (c)), the originator can send a deletion request (e.g., DELBA Request) frame to the recipient, and then the recipient feeds back an Ack.

In the Data & Block acknowledgement stage (i.e., stage (b)), the Block Ack Req (BAR) may be in an example format shown in Table 1 below.

**Table 1**

| | | | | | | |
|---|---|---|---|---|---|---|
| Frame Control | Durati on | RA | TA | BAR Control | BAR Information | FCS |

In the Data & Block acknowledgement stage (i.e., stage (b)), the BA fed back may have different mode types.

For example, the type of the BA fed back may include a compressed Block Ack type. The "BA information" field of the compressed Block Ack frame may be in an example format shown in Table 2 below.

**Table 2**

| | |
|---|---|
| Block Ack Starting Sequence Control | Block Ack Bitmap |

For example, the type of the BA fed back may include a multi-station Block Ack (e.g., Multi-STA BlockAck) type. The "BA information" field of the Multi-STA BlockAck may be in an example format shown in Table 3 below.

**Table 3**

| |
|---|
| Per AID TID Info (Per association identifier traffic identification information) |

The information in Table 3 may repeatedly exist for each of the multiple STAs. The "Per AID TID Info" can be in an example format shown in Table 4 below.

**Table 4**

| | | |
|---|---|---|
| AID TID Info | Block Ack Starting Sequence Control | Block Ack Bitmap |

In Table 4, the "AID TID Info" may be in an example format shown in Table 5 below.

**Table 5**

| | | |
|---|---|---|
| AID 11 | Ack Type | TID |

For example, the type of the BA fed back may include a Multi-TID BlockAck type. The "BA information" field of the Multi-TID BlockAck may be in an example format shown in Table 6 below.

**Table 6**

| | | |
|---|---|---|
| Per TID Info | Block Ack Starting Sequence Control | Block Ack Bitmap |

The "BA information" field shown in Table 6 may exist repeatedly for each TID.

In the BA frame, the BA bitmap, such as illustrated in Tables 2, 4, and 6, may be used to feed back reception states of the data frames (e.g., the Media Access Control Service Data Units (MSDUs) or the Aggregate-MSDUs (A-MSDUs)). However, the BA request frame does not include any length information of the bitmap that needs to be fed back. For example, if 512 data frames are transmitted consecutively between the originator and the recipient, the recipient may use a BA of 256 bytes for feedback, which results in a waste of resources. In view of this, the disclosure provides a multi-link (ML) communication method and a communication apparatus to at least address the above technical problem.

FIG. 2 is a flowchart illustrating a communication method according to an example embodiment of the disclosure.

FIG. 2 illustrates operations that may be performed by the originator. Correspondingly, FIG. 3 described below illustrates operations that may be performed by the recipient. According to the embodiment of the disclosure, the originator may be one of an Access Point (AP) and a non-AP STA, and the recipient may be the other one of the AP and the non-AP station. The AP may include a software application and/or a circuit to enable other types of nodes in the wireless network to communicate with the outside and inside of the wireless network through the AP. For example, the AP may be a terminal device or a network device equipped with a Wi-Fi chip. The non-AP STA may access the network via the AP. For example, the non-AP STA may include, but is not limited to: a cellular phone, a smart phone, a wearable device, a computer, a personal digital assistant (PDA), a personal communication system (PCS) device, a personal information manager (PIM), a personal navigation device (PND), a global positioning system, a multimedia device, or an Internet of Things (IoT) device.

In the example embodiments of the disclosure, the AP and the non-AP STA may be multi-link devices (MLDs) that support the ability to simultaneously transmit and/or receive on multiple links at the same moment. In this case, the AP and the non-AP STA may be represented as AP MLD and non-AP STA MLD, correspondingly. According to the embodiments of the disclosure, the originator may be one of an AP MLD and a non-AP STA MLD both supporting the multi-link (ML) communication, and the recipient can be the other one of the AP MLD and the non-AP STA MLD. That is, the communication method illustrated in FIG. 2 can be applied to a ML communication environment.

As illustrated in FIG. 2, at step 210, a first message frame is determined. For example, the first message frame may be determined on any of multiple links supported by the originator. According to example embodiments, the first message frame may include bitmap information, and the bitmap information may indicate a length of a bitmap of a BA fed back. In other words, the bitmap information may indicate to feed back reception states of a particular number of data frames sent on multiple links.

According to embodiments of the disclosure, the first message frame may be a BA request frame. The bitmap information carried in the BA request frame (i.e., the first message frame) can be used to determine the length of the bitmap of the BA frame (e.g., each BA bitmap of Table 2, Table 4 and Table 6) fed back. In embodiments of the disclosure, the first message frame (e.g., the BA request frame) may have different formats depending on the types of frames (e.g., the BA frames) fed back by the recipient. That is, different formats may be defined for the BA request frame depending on different types of BA frames, and information about the bitmap that needs to be fed back can be carried in various types of first message frame (the BA Request frames), to improve utilization of spectrum resources.

### I. The type of BA frame fed back includes a basic BA type or a compressed BA type.

In this case, the first message frame (i.e., the BA request frame) may reuse a BA request control field (e.g., the "BAR Control" in Table 1) to identify the length of the bitmap of the BA fed back. That is, the bitmap information may be included in the BA request control field of the first message frame. As an example, the "BAR Control" field may be in the format shown in Table 7 below.

**Table 7**

| | | | |
|---|---|---|---|
| BAR Ack Policy | BAR Type | Block Ack Bitmap Length | TID_INFO |

In Table 7, the "BAR Ack Policy" sub-field may indicate the BA type including such as an immediate BA or a delay BA. The "BAR Type" sub-field may indicate the type of the BAR frame, which may be set as the compressed BA type in this embodiment. The "Block Ack Bitmap Length" may indicate the length of the bitmap of the BA fed back. The "TID_INFO" may indicate information of the traffic identification (TID).

According to embodiments of the disclosure, the bitmap information in the first message frame may be the "Block Ack Bitmap Length" in Table 7, and the length indicated by the bitmap information may correspond to the value of the "Block Ack Bitmap Length" in Table 7. In the following context, the "length of the bitmap information" may be used interchangeably with the "Block Ack Bitmap Length" for ease of description. The "Block ACK Bitmap Length" also identifies the number of received data frames (e.g., the MSDUs or the A-MSDUs) to be fed back by the recipient, and the data frames may be sent on one or more links.

According to embodiments of the disclosure, the length indicated by the bitmap information may be set to correspond to the number of MSDUs or A-MSDUs whose reception states need to be fed back. For example, the maximum number of MSDUs or A-MSDUs supported for feedback may be 8, 64, 256, 512 or 1024. That is, according to the value of the "Block Ack Bitmap Length" in Table 7, the reception states of 8, 64, 256, 512, or 1024 MSDUs/A-MSDUs may be fed back via the BA bitmap (such as the BA bitmap in each of Tables 2, 4, and 6).

In an embodiment, the length (i.e., the "Block Ack Bitmap Length" in Table 7) indicated by the bitmap information may have a plurality of bits. For example, the "Block Ack Bitmap Length" in Table 7 may have 7 bits, and the 7 bits may take different values to identify different lengths. For example, the value "0000000" may identify that the length is 8, which indicates that reception states of 8 MSDUs or A-MSDUs are to be fed back through the BA frame; the value "0000001" identifies that the length is 16, which indicates that reception states of 16 MSDUs or A-MSDUs are to be fed back through the BA frame; the value "0000011" identifies that the length is 64, which indicates that reception states of 64 MSDUs or A-MSDUs are to be fed back through the BA frame; the value "0000111" identifies that the length is 256, which indicates that reception states of 256 MSDUs or A-MSDUs are to be fed back through the BA frame; the value "0001111" identifies that the length is 512, which indicates that reception states of 512 MSDUs or A-MSDUs are to be fed back through the BA frame; and the value "0011111" identifies that the length is 1024, which indicates that reception states of 1024 MSDUs or A-MSDUs are to be fed back through the BA frame. It is understandable that the number of bits, the values taken by the bits, and the number of MSDUs or A-MSDUs whose reception states need to be fed back shown herein are illustrative only and are not intended to limiting the disclosure, and other suitable values are included within the scope of the disclosure.

In addition, the length indicated by the bitmap information may be set according to the granularity size of the value represented by each bit. Considering the granularity, more bits may be utilized to identify the length indicated by the bitmap information, so that a change may be made to the "BAR Control" field of Table 7 or the "BAR Information (BA Request information)" field of Table 1 may be utilized for identifying.

In an embodiment, a change may be made to the "BAR Control" field of Table 7 to utilize more bits to identify the length indicated by the bitmap information. For example, the "Block Ack Bitmap Length" in Table 7 may have 10 bits each representing a value of 2, and the length identified by the "Block Ack Bitmap Length" may have values shown in Table 8 below. It is understandable that the character "......" shown in Table 8 indicates other values of the "Block Ack Bitmap Length", which indicates to feed back reception states of other numbers of MSDUs or A-MSDUs, and thus it may be assumed that the numbers indicated by the values of the "Block Ack Bitmap Length" in Table 8, i.e., "8, 16, 64, 256, 512, 1024", are only boundary values, and other bit values of the "Block Ack Bitmap Length" can be set to indicate to feed back other numbers of reception states of MSDUs or A-MSDUs. For example, other bit values may each be a value greater than 0 and less than 8, a value between 8 and 16, a value between 16 and 64, a value between 64 and 256, a value between 256 and 512, or a value between 512 and 1024. In addition, each value in Table 8 is only an example, and more bits may be utilized to identify the "Block Ack Bitmap Length" to indicate more length values.

**Table 8**

| Value of Block Ack Bitmap Length | meaning |
|---|---|
| ...... | ...... |
| 00000 00111 | indicating the BA frame to feed back reception states of 8 MSDUs or A-MSDUs |
| ...... | ...... |
| 00000 01111 | indicating the BA frame to feed back reception states of 16 MSDUs or A-MSDUs |
| ...... | ...... |
| 00001 11111 | indicating the BA frame to feed back reception states of 64 MSDUs or A-MSDUs |
| ...... | ...... |
| 00111 11111 | indicating the BA frame to feed back reception states of 256 MSDUs or A-MSDUs |
| ...... | ...... |
| 01111 11111 | indicating the BA frame to feed back reception states of 512 MSDUs or A-MSDUs |
| ...... | ...... |
| 11111 11111 | indicating the BA frame to feed back reception states of 1024 MSDUs or A-MSDUs |

In another embodiment, the "BAR Information" field of Table 1 may be used for identifying, for example, using more bits to indicate the length indicated by the bitmap information. That is, the bitmap information may be included in the "BAR Information" field of the first message frame. In this case, the "BAR Information" field may be in a format shown in Table 9 below.

**Table 9**

| | |
|---|---|
| Starting Sequence Number | Bitmap Length |

In Table 9, the "Starting Sequence Number" can identify a respective starting frame number of each MSDU or A-MSDU corresponding to the TID, and the MSDUs or A-MSDUs corresponding to the TID can be transmitted on one link or on multiple links. The "Bitmap Length" can identify the length indicated by the bitmap information, i.e., the number of MSDUs or A-MSDUs whose reception states need to be fed back. That is, the "Bitmap Length" (i.e., the length indicated by the bitmap information) in Table 9 may be set to correspond to the number of MSDUs or A-MSDUs whose reception states need to be fed back. As an example, 10 bits may be utilized to identify the "Bitmap Length" as shown in Table 8 above, which is only an example and other numbers of bits are also feasible. Furthermore, it is understandable that the format of the "BAR Information" field shown in Table 9 is only an example, which is not limited in the disclosure. For example, the "BAR Information" field may also include a fragment number or others.

### II. The type of the BA fed back is a Multi-TID BA type.

In this case, the bitmap information may be included in the "BAR Information" field of the first message frame. In detail, the bitmap information may be included in a "Per TID Info" field of the "BAR Information" field. For example, the "BAR Information" in Table 1 may be in an example format shown in Table 10 below.

**Table 10**

| | |
|---|---|
| Per TID Info | Block Ack Starting Sequence Number |

Since there are a plurality of TIDs, the "BAR Information" field shown in Table 10 may exist repeatedly for each of the plurality of TIDs. As an example, "Per TID Info" of Table 10 may be in an example format shown in Table 11 below.

**Table 11**

| | |
|---|---|
| Bitmap Length | TID Value |

In Table 11, the value of the "Bitmap Length" may be set to correspond to the number of MSDUs or A-MSDUs whose reception states need to be fed back, which may be 8, 64, 256, 512 or 1024, as described above. The "Bitmap Length" may have a plurality of bits, for example, 12 bits, which is merely an example and is not limited in the disclosure. The "Bitmap Length" may also have less bits (e.g., 7 bits or 10 bits, as described above), and thus the remaining bits (e.g., 5 bits or 4 bits) as reserved bits. Or, the "Bitmap Length" may have more bits. According to embodiments of the disclosure, a value corresponding to the plurality of bits may be utilized to identify the length of the bitmap. For example, similar to the identification method of Table 8, a binary value corresponding to the plurality of bits may be utilized to represent the length, and repetitive descriptions are omitted herein for the sake of brevity, which is not limited in the disclosure. The setting of the plurality of bits of the "Bitmap Length" may be similar to the example of the "Block Ack Bitmap Length" in Table 7 above, and the repetitive description is omitted herein for brevity.

According to embodiments of the disclosure, the first message frame may further include starting sequence number information bits. For example, the first message frame includes starting sequence number information bits, such as the "Block Ack Starting Sequence Number" in Table 10, included in the "BAR Information" field. The starting sequence number information bits may identify the starting frame numbers of the MSDUs or A-MSDUs corresponding to the TID. The MSDUs or A-MSDUs corresponding to the TID may be transmitted on one link or on multiple links.

### III. The type of the BA frame fed back is a Multi-STA BA type.

If the Multi-STA BA type is supported, the following types of A-MSDUs can be acknowledged, including such as single-STA multi-TID A-MSDU, multi-STA single-TID A-MSDU, and multi-STA multi-TID A-MSDU. The corresponding first message frame can be defined according to the type of A-MSDU to be acknowledged, which will be described in detail below.

The acknowledgment of the single-STA multi-TID A-MSDU is similar to the embodiments in the above case II, and the repeated description is omitted here for the sake of brevity.

For the acknowledgement of the multi-STA single-TID A-MSDU, the first message frame may include a TID identifier, respective AID identifiers of the plurality of STAs corresponding to the TID identifier, and respective bitmap information corresponding to the STAs. In addition, a respective starting sequence number (SSN) of each STA can also be included. As an example, these contents may be included in the "BAR Information" field of the first message frame, which may be in an example format shown in Table 12 below.

**Table 11**

| | | | | | | | |
|---|---|---|---|---|---|---|---|
| TID | AID1 | SSN1 | Bitmap Length 1 | AID2 | SSN2 | Bitmap Length 2 | ... |

In Table 11, "TID" may represent an identifier of a single TID, "AID1" and "AID2" may represent respective AID identifiers of corresponding STAs, "SSN1" and "SSN2" may represent respective SSNs of the corresponding STAs, and "Bitmap Length 1" and "Bitmap Length 2" may represent respective bitmap lengths regarding corresponding STAs. According to embodiments of the disclosure, a value corresponding to a plurality of bits may be utilized to identify a bitmap length (e.g., the "Bitmap Length 1" or the "Bitmap Length 2", etc.) for a corresponding STA. For example, the bitmap length (e.g., each of the "Bitmap Length 1", the "Bitmap Length 2") including the plurality of bits may be set similarly to the examples described above in Cases I and II, and repetitive descriptions are omitted herein for the sake of conciseness. The "SSN1" and "SSN2" may correspond to SSN information bits, which may identify respective starting frame numbers of the MSDUs or the A-MSDUs corresponding to the TID. For different STAs, starting values of the SSNs may be different, but values of the "Bitmap Length" may be different or identical. Although it is shown in Table 11 that a single TID corresponds to two STAs (i.e., the AID1 and the AID2), it is only an example and is not considered as limiting the disclosure.

For the acknowledgement of the multi-STA multi-TID A-MSDU, the first message frame may include respective TID identifiers corresponding to a plurality of TIDs, at least one AID identifier of at least one STA corresponding to each TID identifier, and respective bitmap lengths corresponding to the STAs. In addition, respective SSNs of the STAs can also be included. As an example, these may be included in the "BAR Information" field of the first message frame, which may be in example formats shown in Table 12-1 and Table 12-2 below.

**Table 12-1**

| | | | | | | | |
|---|---|---|---|---|---|---|---|
| TID1 | AID11 | SSN11 | Bitmap Length11 | AID12 | SSN12 | Bitmap Length12 | ... |

**Table 12-2**

| | | | | | | | |
|---|---|---|---|---|---|---|---|
| TID2 | AID21 | SSN21 | Bitmap Length21 | AID22 | SSN22 | Bitmap Length22 | ... |

Although Tables 12-1 and 12-2 are shown separately, the contents of Tables 12-1 and 12-2 may be included together in the "BAR Information" field of the first message frame. As shown in Table 12-1 and Table 12-2, the "BAR Information field" of the first message frame may include: "TID1," "TID2," "AID11" and "AID12" (identifiers of STAs) corresponding to the "TID1", "SSN11" corresponding to the "AID11", "Bitmap Length11" corresponding to the "AID11", "SSN12" corresponding to the "AID12", "Bitmap Length12" corresponding to the "AID12", "AID21" and "AID22" (identifiers of STAs) corresponding to the "TID2", "SSN21" corresponding to the "AID21", "Bitmap Length21" corresponding to the "AID21", "SSN22" corresponding to the "AID22", and "Bitmap Length22" corresponding to the "AID22". In Tables 12-1 and 12-2, starting values of the SSNs may be different, but values of the Bitmap Lengths may be different or identical. According to embodiments of the disclosure, a value corresponding to a plurality of bits may be utilized to identify a bitmap length (e.g., the Bitmap Length11, Bitmap Length12, Bitmap Length21 or Bitmap Length22) of a corresponding STA. For example, the setting of bitmap length including a plurality of bits may be similar to the examples described above in Case I and Case II, and repetitive descriptions are omitted herein for brevity. Although it is shown in Tables 12-1 and 12-2 that there are two TIDs (TID1 and TID2) and two STAs (AID11 and AID12, AID21 and AID22) for each of the TIDs, it is only an example and is not considered as limiting the disclosure.

It is understandable that each element shown in Table 1 to Table 12-2 is only an example, and some of the elements may be omitted or other elements may also be included. Furthermore, each element shown in Table 1 to Table 12-2 are independent of each other, and the elements are listed in the same table as an example, which does not mean that all of the elements in the table must be present at the same time as shown in the table. The value of each element is independent of any other element value in Table 1 to Table 12-2. Therefore, it is understandable by those skilled in the art that the value of each element in the tables of the disclosure is an independent embodiment.

As illustrated in FIG. 2, at step 220, the first message frame is sent. The link on which the first message frame is sent and the link on which the first message frame is determined may be identical or different, which is not limited in the disclosure. The originator may send the first message frame carrying the bitmap information to the recipient to inform it of the number of MSDUs or A-MSDUs whose reception states should be fed back in the BA bitmap of the frame (e.g., the BA frame) fed back.

FIG. 3 is a flowchart illustrating another communication method according to an example embodiment of the disclosure. The flowchart of FIG. 3 illustrates operations that may be performed by the recipient, which correspond to the operations performed by the originator shown in FIG. 2.

As illustrated in FIG. 3, at step 310, a first message frame is received. The first message frame includes bitmap information, and the bitmap information indicates a length of a bitmap of a BA fed back. In addition, the first message frame may include SSN information bits, and the SSN information bits may identify respective starting frame numbers of the MSDUs or A-MSDUs corresponding to the TID. In addition, the first message frame may include: at least one TID identifier corresponding to the TID, and/or at least one AID identifier of at least one STA corresponding to each TID identifier. According to embodiments of the disclosure, the first message frame may be a BAR frame. In embodiments of the disclosure, the first message frame (e.g., the BAR frame) may have different formats depending on the types of the frames (e.g., the BA frames) fed back by the recipient. The frame (e.g., the BA frame) fed back by the recipient may be in a basic BA type, a compressed BA type, a Multi-TID BA type, or a Multi-STA BA type. For the Multi-STA BA type, the following A-MSDUs can be acknowledged, including such as single-STA multi-TID A-MSDUs, multi-STA single-TID A-MSDUs, or multi-STA multi-TID A-MSDUs. For example, for the basic BA frame type or the compressed BA frame type, the bitmap information and the SSN information bits may be included in a "BAR Control" field or in a "BAR Information" field of the first message frame. For the multi-TID BA type or the BA of the single-STA multi-TID A-MSDUs, "Per TID Info" field of the first message frame may include bitmap information, at least one TID identifier, and/or at least one AID identifier of at least one STA corresponding to each TID identifier. For the BA of the multi-STA single-TID A-MSDUs or the BA of the multi-STA multi-TID A-MSDUs, the "BAR Information" field of the first message frame includes: at least one TID identifier, at least one AID identifier of at least one STA corresponding to each TID identifier, a respective SSN for each STA, and respective bitmap information for each STA. In detail, the first message frame may have different formats depending on different types of frames (e.g., the BA frames) fed back, which may be similar to the embodiments described above with reference to Case I, Case II, and Case II, and repetitive descriptions are omitted herein for the sake of brevity.

At step 320, a communication operation is performed based on the first message frame. For example, the BA frame to be fed back may be determined based on the first message frame, and the BA frame is sent. According to embodiments of the disclosure, the BA frame may include information about reception states of the MSDUs or A-MSDUs, which may be identified, for example, using bitmap information in the BA frame. As an example, the number of MSDUs or A-MSDUs whose reception states need to be fed back may correspond to a length indicated by the bitmap information included in the first message frame. That is, the length of the bitmap information in the BA frame may be determined based on the length indicated by the bitmap information carried in the first message frame.

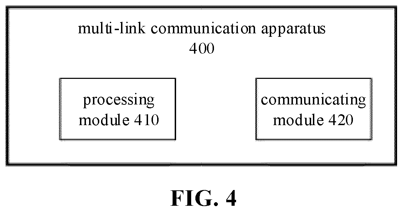

FIG. 4 is a block diagram illustrating a ML communication apparatus 400 according to an example embodiment of the disclosure.

As illustrated in FIG. 4, the apparatus 400 may include: a processing module 410 and a communicating module 420. In an embodiment, the communication apparatus illustrated in FIG. 4 may be applied to an originator to perform the method illustrated in FIG. 2. In another embodiment, the communication apparatus illustrated in FIG. 4 may be applied to a recipient to perform the method illustrated in FIG. 3.

According to embodiments, the communication apparatus 400 illustrated in FIG. 4 may be applied to an originator. In this case, the processing module 410 may be configured to: determine a first message frame, in which the first message frame includes bitmap information, and the bitmap information indicates a length of a bitmap of a BA fed back. The communicating module 420 may be configured to: send the first message frame. In detail, the first message frame may have different formats depending on different types of frames (e.g., the BA frames) fed back, which may be similar to the embodiments described above with reference to Case I, Case II, and Case II, and repetitive descriptions are omitted herein for the sake of brevity. That is, the communication apparatus 400 may perform the communication method described with reference to FIG. 2, and repeated descriptions are omitted herein for brevity.

The communication apparatus 400 illustrated in FIG. 4 is applied to a recipient, in which case the communicating module 420 may be configured to: receive a first message frame, in which the first message frame includes bitmap information, and the bitmap information indicates a length of a bitmap of a BA fed back. The processing module 510 may be configured to: perform a communication operation based on the first message frame. For example, the processing module 510 may analyze the first message frame and/or other data frames, determine a BA frame based on the parsing result, and control the communicating module 420 to send the BA frame. In this case, the communication apparatus 400 may perform the communication method described with reference to FIG. 3, and repeated descriptions are omitted herein for brevity.

Furthermore, the communication apparatus 400 illustrated in FIG. 4 is merely an example, which is not used to limit the embodiments of the disclosure. For example, the communication apparatus 400 may include other modules, for example, a memory module and the like. In addition, the modules in the ML communication apparatus 400 may be combined into more complex modules or may be divided into more separate modules.

The ML communication method and the ML communication apparatus according to embodiments of the disclosure can carry different types of BARs and bitmap information that needs to be fed back, so as to improve the utilization rate of spectrum resources.

Based on the same principles as the methods provided in the embodiments of the disclosure, the embodiments of the disclosure also provide an electronic device including a processor and a memory. The memory is configured to store machine-readable instructions (which may also be referred to as computer programs), and the processor is configured to execute the machine-readable instructions to implement the methods described with reference to FIGS. 2 and 3.

The embodiments of the disclosure also provide a computer-readable storage medium having computer programs stored thereon. When the computer programs are executed by the processor, the method described with reference to FIGS. 2-3 is implemented.

In exemplary embodiments, the processor may be a logic box, a module or a circuit for implementing or executing various exemplary embodiments described in the disclosure, for example, a Central Processing Unit (CPU), a general processor, a Digital Signal Processor (DSP), an Application Specific Integrated Circuit (ASIC), a Field Programmable Gate Array (FPGA), or other programmable logic devices, transistor logic devices, hardware components or any combination thereof. The processor may also be a combination used to implement a computing function, for example, a combination consisting of one or more microprocessors, and a combination consisting of DSPs and microprocessors.

In the example embodiments, the memory may be, for example, a Read Only Memory (ROM), a Random Access Memory (RAM), an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store program codes in the form of instructions or data structures and can be accessed by a computer, which is not limited herein.

It is understandable that although steps in the flowchart of the accompanying drawings are shown sequentially as indicated by the arrows, the steps are not necessarily performed sequentially in the order indicated by the arrows. Unless explicitly stated otherwise in the disclosure, there is no strict sequential limitation on the execution of these steps, which may be performed in any other order. In addition, at least some of the steps in the flowchart of the accompanying drawings may include a plurality of sub-steps or a plurality of phases, which are not necessarily executed at the same time, but may be executed at different times. The execution order is not necessarily sequential, and the steps can be performed alternately or alternatively with other steps or at least part of sub-steps or phases of other steps.

Although the disclosure has been shown and described with reference to the embodiments of the disclosure, it will be understandable by those skilled in the art that various changes in form and detail can be made without departing from the scope of the disclosure. Accordingly, the scope of the disclosure should not be limited by the embodiments, but should be defined by the appended claims and their equivalents.

## Claims

1. A multi-link communication method, comprising:
determining a first message frame, wherein the first message frame comprises bitmap information, and the bitmap information indicates a length of a bitmap of a block acknowledgement fed back; and
sending the first message frame.

2. The method of claim 1, wherein the length indicated by the bitmap information is configured to correspond to a number of Media Access Control Service Data Units (MSDUs) or Aggregate-MSDUs (A-MSDUs) whose reception states need to be fed back.

3. The method of claim 1, wherein the bitmap information is included in a block acknowledgement request control field of the first message frame.

4. The method of claim 1, wherein the bitmap information is included in a block acknowledgement request information field of the first message frame.

5. The method of claim 3 or 4, wherein a type of the block acknowledgment fed back is a basic block acknowledgment type or a compressed block acknowledgment type.

6. The method of claim 1, wherein the bitmap information is included in a Per Traffic Identification (TID) Info field of the first message frame.

7. The method of claim 6, wherein a type of the block acknowledgment fed back is a multi-TID block acknowledgment type.

8. The method of claim 4 or 7, wherein the first message frame further comprises: at least one traffic identification (TID) and/or at least one association identifier (AID) of at least one station corresponding to each TID.

9. The method of any one of claims 1 to 8, wherein the first message frame further comprises: starting sequence number information bits, and each starting sequence number information bit identifies a starting frame number of a Media Access Control Service Data Unit (MSDU) or an Aggregate-MSDU (A-MSDU) corresponding to a Traffic Identification (TID).

10. A multi-link communication method, comprising:
receiving a first message frame, wherein the first message frame comprises bitmap information, and the bitmap information indicates a length of a bitmap of a block acknowledgement fed back; and
performing a communication operation based on the first message frame.

11. The method of claim 10, wherein performing the communication operation based on the first message frame, comprises:
sending a block acknowledgement frame, wherein the block acknowledgement frame comprises information about reception states of Media Access Control Service Data Units (MSDUs) or Aggregate-MSDUs (A-MSDUs), and a number of the MSDUs or the A-MSDUs corresponds to the length indicated by the bitmap information.

12. The method of claim 11, wherein the bitmap information is included in a block acknowledgement request control field of the first message frame.

13. The method of claim 11, wherein the bitmap information is included in a block acknowledgement request information field of the first message frame.

14. The method of claim 12 or 13, wherein the block acknowledgment frame is a basic block acknowledgment frame or a compressed block acknowledgment frame.

15. The method of claim 11, wherein the bitmap information is included in a Per Traffic Identification (TID) field of the first message frame.

16. The method of claim 15, wherein the block acknowledgement frame is a multi-TID block acknowledgement frame.

17. The method of claim 13 or 16, wherein the first message frame further comprises: at least one traffic identification (TID) and/or at least one association identifier (AID) of at least one station corresponding to each TID.

18. The method of any one of claims 10 to 17, wherein the first message frame further comprises: starting sequence number information bits, and each starting sequence number information bit identifies a starting frame number of a Media Access Control Service Data Unit (MSDU) or an Aggregate-MSDU (A-MSDU) corresponding to a Traffic Identification (TID).

19. A multi-link communication apparatus, comprising:
a processing module, configured to determine a first message frame, wherein the first message frame comprises bitmap information, and the bitmap information indicates a length of a bitmap of a block acknowledgement fed back; and
a communicating module, configured to send the first message frame.

20. A multi-link communication apparatus, comprising:
a communication module, configured to receive a first message frame, wherein the first message frame comprises bitmap information, and the bitmap information indicates a length of a bitmap of a block acknowledgement fed back; and
an executing module, configured to perform a communication operation based on the first message frame.

21. An electronic device, comprising a memory, a processor, and a computer program stored on the memory and executable by the processor, wherein when the computer program is executed by the processor, the method of any one of claims 1 to 9 or the method of any one of claims 10 to 18 is performed.

22. A computer-readable storage medium having a computer program stored thereon, wherein when the computer program is executed by a processor, the method of any one of claims 1 to 9 or the method of any one of claims 10 to 18 is performed.
